Europäisches Patentamt

(19) European Patent Office

Office européen des brevets

(11) Numéro de publication: **0 076 219**
**A1**

## (12) DEMANDE DE BREVET EUROPEEN

(21) Numéro de dépôt: **82420127.1**

(22) Date de dépôt: **16.09.82**

(51) Int. Cl.³: **A 01 C 7/18**

(30) Priorité: **22.09.81 FR 8118171**

(43) Date de publication de la demande:
**06.04.83 Bulletin 83/14**

(84) Etats contractants désignés:
**AT BE CH DE GB IT LI LU NL SE**

(71) Demandeur: **SOCIETE DE DEVELOPPEMENT ET RECHERCHE EN MACHINISME AGRICOLE - SODERMA Domaine de Ponteves le Sambuc F-13200 Arles(FR)**

(72) Inventeur: **Feller, Marc La côte Route de Saint-Chamas F-13800 Istres(FR)**

(74) Mandataire: **Maureau, Bernard Cabinet GERMAIN & MAUREAU Le Britannia - Tour C 20, Boulevard Eugène Déruelle F-69003 Lyon(FR)**

(54) Semoir de graines en poquets.

(57) Ce semoir est du type de ceux comportant au moins un tambour qui est animé d'un mouvement de rotation continu autour d'un axe horizontal à proximité du sol et qui comporte des alvéoles périphériques dans lesquels les graines se concentrent avant d'être déposées.

Chaque alvéole (34) de ce tambour (1) est associé à un clapet de fermeture (35') qui est lui-même associé à des moyens permettant son ouverture automatique lorsque l'alvéole correspondant atteint la position dans laquelle les graines doivent être libérées.

Sous la trémie principale (13) sont fixées des trémies secondaires (12) associées chacune à un tambour distributeur; et la liaison entre la trémie principale (13) et les trémies secondaires (12) est faite par l'intermédiaire d'un ensemble de glissières (14-15) grâce auxquelles il est possible de déplacer les trémies secondaires longitudinalement et transversalement par rapport à la direction de marche du tracteur portant le semoir.

EP 0 076 219 A1

./...

FIG.3

L'invention a pour objet un semoir de graines en poquets.

Il est connu que la culture en poquets permet l'obtention de bons rendements et l'amélioration de la régularité de la production d'une année à l'autre. Il en est ainsi notamment pour le riz, mais aussi pour le blé, le sorgho, la luzerne, le soja, les petits pois .......

Pour que les graines soient déposées en poquets réguliers, il importe que l'organe distributeur les libérant soit placé aussi près que possible du sol, sans néanmoins qu'il y ait risque de contact entre cet organe et les aspérités du sol.

Il s'agit là d'un problème que l'invention résoud favorablement. Elle a pour objet, à cet effet, un semoir qui est du type de ceux dans lesquels la distribution des graines est réalisée par un tambour à alvéoles et qui présente l'originalité d'associer à chaque alvéole du tambour un clapet de fermeture, qui est lui-même associé à des moyens permettant son ouverture automatique lorsque l'alvéole correspondant atteint la position dans laquelle les graines doivent être libérées.

L'invention sera bien comprise d'ailleurs et ses avantages ainsi que d'autres caractéristiques ressortiront bien de la description qui suit, en référence au dessin schématique annexé représentant, à titre d'exemple non limitatif, une forme d'exécution de ce semoir :

Figures 1 et 2 sont des vues d'ensemble, mais partielles, illustrant respectivement de face et de côté en élévation les mécanismes de support et d'entraînement du semoir;

Figure 3 est, à plus grande échelle, une vue de côté en élévation avec coupe longitudinale partielle, du semoir et

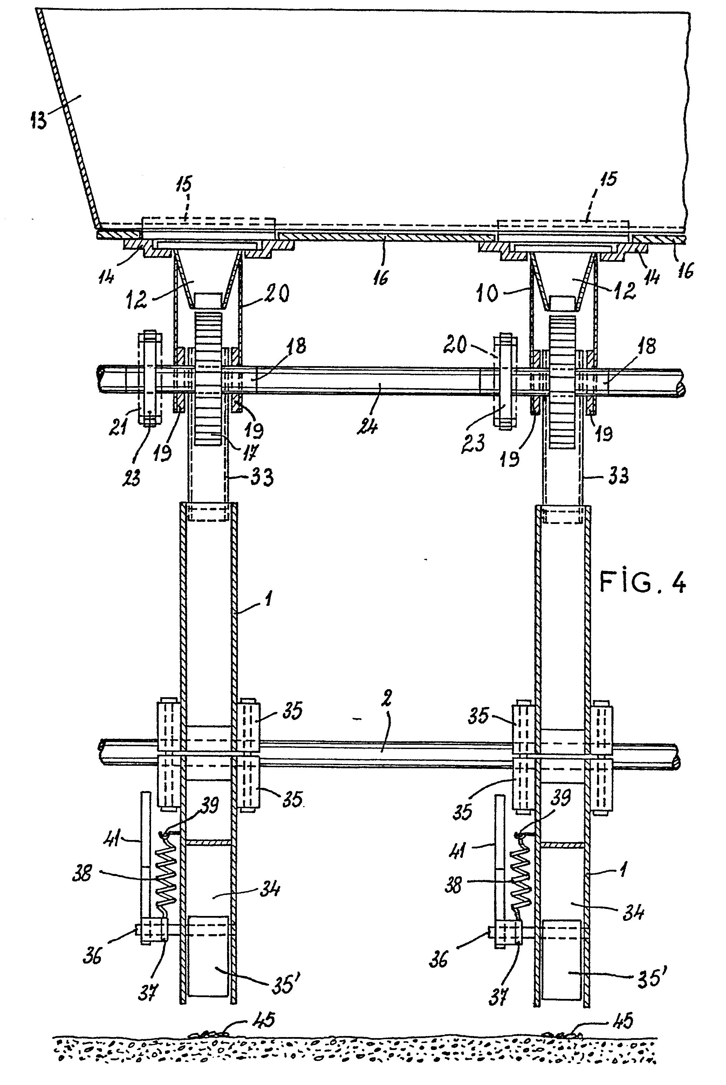

Figure 4 en est une vue en coupe transversale suivant 4-4 de figure 3.

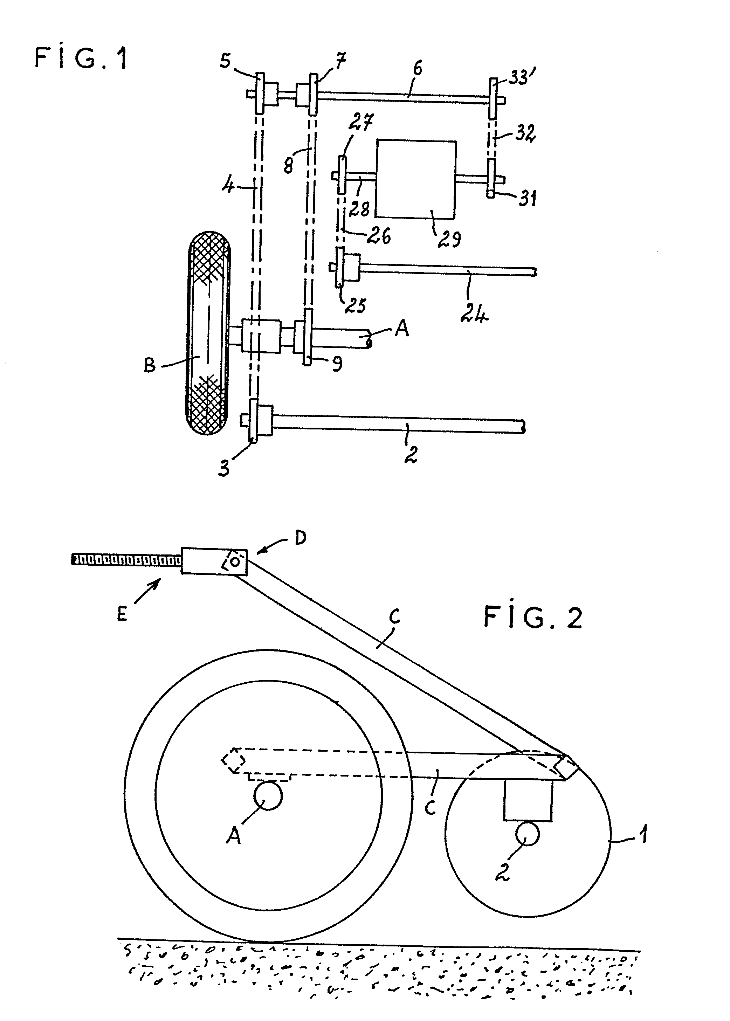

Aux figures 1 et 2, A désigne l'arbre ou essieu du semoir, arbre qui est équipé de deux roues d'appui sur le sol et dont seule celle B est visible sur le dessin. Cet arbre porte le chassis C du semoir, chassis dont la partie supérieure D est articulée à un système vis et écrou E reliant le semoir au système de relevage d'un tracteur, et permettant ainsi de régler l'écartement entre le sol et les tambours 1 distributeurs de graines qui sont portés par un arbre transversal 2.

Cet arbre 2 qui est lui-même porté par le chassis du semoir est entraîné en rotation par un ensemble pignon 3 - chaîne 4 - pignon 5 recevant son mouvement de rotation d'un arbre de renvoi 6 qui reçoit lui-même son mouvement de l'arbre A des roues B du semoir par l'intermédiaire d'un pignon 7, d'une chaîne 8 et d'une roue libre 9. Le but de cette dernière est de ne permettre l'entraînement des tambours 1 du semoir que lorsque le tracteur et le semoir se déplacent en marche avant.

Chacun des tambours distributeurs 1 est placé en-dessous d'une trémie secondaire 12, et les trémies secondaires 12 sont placées sous une unique trémie principale 13; le nombre des tambours 1 et des trémies secondaires 12 est quelconque et variable à volonté.

Chaque trémie secondaire 12 communique avec la trémie principale 13 et est coulissante sur des guides 14 qui sont placés longitudinalement, c'est-à-dire parallèlement à l'axe longitudinal du tracteur sur lequel est monté le semoir. Les deux guides 14 supportant chaque trémie 12 sont eux-mêmes montés coulissants dans un cadre 15 porté par la trémie principale 13; mais il est important de noter que le coulissement permis par ce cadre 15 est transversal par rapport à l'axe longitudinal du tracteur. Grâce à cet aménagement, il est dès lors compréhensible que chaque trémie 12 peut être déplacée sous la trémie principale 13, tant dans le sens longitudinal que dans le sens transversal. Des plaques de fermeture 16 sont prévues dans le fond de la trémie 13 pour obturer les espaces libres délimités par les trémies 12. Ces plaques 16 sont amovibles et leur largeur est fonction de celle des ouvertures à fermer

3

dans le fond de la trémie principale 13 entre les trémies secondaires 12.

Chaque trémie secondaire 12 est associée à un système distributeur avec lequel elle constitue un ensemble. Cet ensemble comprend essentiellement un galet distributeur 17 et un tambour distributeur 1.

Le galet distributeur 17 est cannelé transversalement sur sa périphérie, ou revêtu d'une couche de grain antidérapant. Il est porté par un axe 18 tourillonnant dans des paliers 19 portés par deux flasques 20 solidaires de la trémie secondaire 12; et sur l'axe 18 est calé un pignon 22. Ce pignon 22 engrène avec un pignon 23 calé sur un arbre 24 qui reçoit son mouvement de rotation de l'arbre de renvoi 6 (fig. 1) par l'intermédiaire d'un pignon 25, d'une chaîne 26, d'un pignon 27 et de l'arbre 28 d'un variateur de vitesse 29 qui est lui-même relié à l'arbre de renvoi 6 par un pignon 31, une chaîne 32 et un pignon 33'.

Les deux flasques 20 issus de chaque trémie secondaire 12 servent enfin de support à un tube vertical 33 dont l'extrémité supérieure biaise est située en-dessous et latéralement par rapport au galet 17, cependant que son extrémité inférieure est située au-dessus du tambour distributeur correspondant 1.

Ce tambour 1 est constitué de deux demi-tambours complémentaires qui par des flasques boulonnés 35 sont rendus solidaires en rotation de l'arbre moteur 2.

Il est important de noter que les pignons 23 ne sont pas systématiquement en prise avec ceux 22 de l'arbre 18. Ils ne sont en prise que lors du fonctionnement du semoir, ou plus précisément lors de la mise en service des trémies secondaires considérées 12. La possibilité de déplacer longitudinalement chaque trémie 12 sous la trémie principale 13, grâce à ses guides 14, permet en effet à volonté :

- soit de mettre en prise le pignon 22 associé à chaque trémie 12 avec le pignon correspondant 23 de l'arbre 24; c'est la position de mise en service de la trémie considérée 12;

- soit d'amener le pignon 22 de la trémie considérée 12 hors de prise du pignon correspondant 23 de l'arbre 24; c'est la position de mise hors service de la trémie considérée 12.

Quant au tambour distributeur 1 qui constitue l'un des éléments essentiels du semoir, il présente sur sa périphérie une pluralité d'alvéoles 34 à chacun desquels est associé un clapet de fermeture 35'. Chaque clapet 35' est calé sur un axe 36 dont est solidaire en rotation une biellette 37 qui est attelée à l'une des extrémités d'un ressort 38, dont l'autre extrémité prend appui fixe en 39 sur le tambour 1. Cette biellette 37 porte à son extrémité libre un doigt 39.

Latéralement au tambour distributeur 1 est placée, de façon fixe et dans sa zone inférieure, une plaque 41 qui joue le rôle de came vis-à-vis des clapets 35' associés aux alvéoles 34 du tambour 1. Cette came 41, dont la position est règlable grâce à des lumières en arc de cercle 42, présente une rampe 43 qui se poursuit par une zone en arc de cercle 44, concentrique à l'axe du tambour 1.

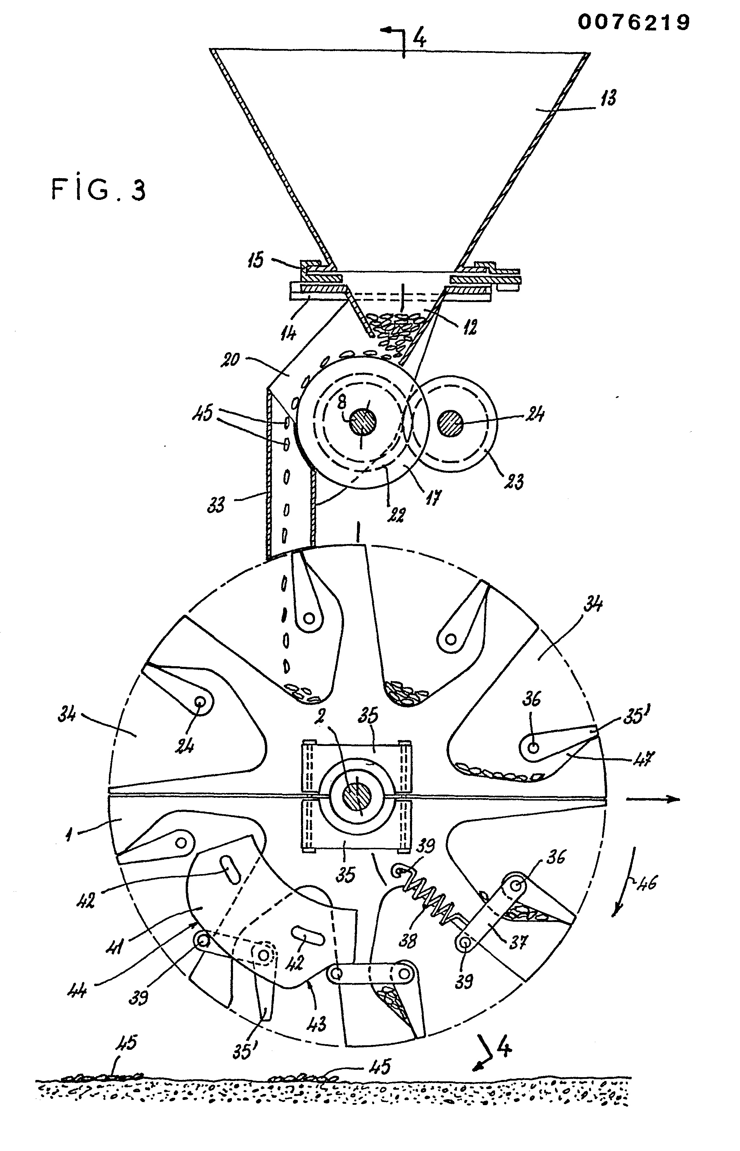

Ce semoir fonctionne dans les conditions ci-après : les arbres 2 et 24 étant animés d'un mouvement de rotation continu, et les pignons 22 associés aux trémies 12 étant en prise avec les pignons 23 de l'arbre 24, les graines provenant de la trémie principale 13 et de chaque trémie secondaire 12 sont acheminées par chaque galet 17 au tube vertical correspondant 33. Comme le montre la figure 3, les graines 45 tombent ainsi verticalement et se rassemblent dans l'alvéole sous-jacent 34 du tambour distributeur 1. Etant donné que ce tambour est animé d'un mouvement de rotation continu dans le sens de la flèche 46 de figure 1, le nombre de graines qui se rassemblent dans l'alvéole 34 est rigoureusement déterminé; il est fonction de la vitesse relative de rotation du galet distributeur 17 et du tambour distributeur 1.

Lorsqu'un certain nombre de graines 45 a ainsi été acheminé dans un alvéole 34 du tambour 1, ces graines se rassemblent peu à peu, comme le montre la figure 1, dans l'espace 47 délimité à l'intérieur de l'alvéole 34 par le clapet 35'; les graines finissent, par l'effet de la rotation, à être peu à peu emprisonnées dans cet espace 47, mais à un moment déterminé, à savoir précisément l'instant où les graines arrivent à proximité du sol, le clapet 35' s'ouvre et les graines 45 se rassemblent en poquets sur le sol.

Cette libération des graines résulte de la prise d'appui du doigt 39 de la biellette 37 associée à chaque clapet 35' sur la came 41; en effet, le doigt 39 de la biellette rencontre la rampe 43 de cette came et monte sur cette rampe jusqu'à atteindre la partie en arc de cercle 44. Le clapet est alors ouvert et les graines 45 sont libérées.

La rotation du tambour distributeur 1 étant continue, le clapet 35' de chaque alvéole 34 se referme automatiquement sous l'action de son ressort de rappel 38, lorsque le doigt 39 de sa biellette 37 échappe à la came fixe 41.

Ce semoir présente de nombreux avantages, parmi lesquels il convient notamment de citer ceux ci-après :

- la distribution des graines est réalisée pratiquement au ras du sol, car aucun organe ne se trouve placé entre le tambour distributeur 1 et le sol; il est donc possible d'obtenir des poquets très réguliers;

- la possibilité de déplacer transversalement les trémies secondaires 12 sous la trémie principale 13 permet de régler l'écartement entre les lignes longitudinales de poquets sur le sol;

- cette possibilité de réglage de la position transversale des trémies 12 sous la trémie principale 13 permet aussi de placer sous cette trémie un nombre quelconque et réglable de trémies secondaires 12;

- la possibilité de régler longitudinalement la position des trémies secondaires 12 sous la trémie principale 13 permet, non seulement d'embrayer et de débrayer le fonctionnement des trémies secondaires 12, mais aussi, si cela s'avère nécessaire, de n'utiliser que certaines trémies secondaires 12 pour la distribution des graines;

- grâce à la présence du variateur de vitesse 29 entre l'arbre de renvoi 6 (dont la vitesse est fonction de celle de déplacement du tracteur) et l'arbre 24 entraînant les galets distributeurs 17, il est possible de régler la densité de la distribution des graines;

- par changement du nombre de dents des pignons 3 et 5 entraînant l'arbre 2 des tambours distributeurs 1, il est possible de modifier la distance longitudinale entre les poquets de graines déposées sur le sol;

- grâce à la position règlable de la came fixe 44, il est possible d'avancer ou de retarder l'ouverture des clapets 35 de chaque tambour distributeur 1 pour provoquer un bon positionnement des poquets de graines sur le sol;

- par modification de la position angulaire des divers tambours distributeurs 1 les uns par rapport aux autres, il est possible de décaler les poquets les uns par rapport aux autres et ainsi de réaliser des semis en carrés, en quinconce, en lignes obliques,........;

- et quels que soient les réglages effectués, la distribution des graines se fait de façon rigoureusement régulière, sans être affectée par la vitesse de déplacement du tracteur entraînant le semoir.

Comme il va de soi, l'invention ne se limite pas à la seule forme d'exécution de ce semoir qui a été ci-dessus indiquée à titre d'exmeple; elle en embrasse, au contraire, toutes les variantes de réalisation. C'est ainsi notamment que les moyens mécaniques utilisés pour l'ouverture et la fermeture des clapets de chaque tambour distributeur peuvent être, non pas mécaniques, mais électriques ou pneumatiques.

7

## REVENDICATIONS

1.- Semoir de graines en poquets, du type comportant au moins un tambour qui est animé d'un mouvement de rotation continue autour d'un axe horizontal à proximité du sol et qui comporte des alvéoles périphériques dans lesquels les graines se concentrent avant d'être déposées sur le sol, caractérisé en ce qu'à chaque alvéole (34) du tambour(1) est associé un clapet de fermeture (35'), qui est lui-même associé à des moyens permettant son ouverture automatique lorsque l'alvéole correspondant atteint la position dans laquelle les graines doivent être libérées.

2.- Semoir selon la revendication 1, caractérisé en ce que le clapet (35') associé à chaque alvéole (34) du tambour distributeur (1) est solidaire d'un axe (36) sur lequel est calée une biellette (37) qui est soumise à l'action d'un ressort de rappel (38) et qui porte un doigt (39) coopérant avec une came latérale fixe (41).

3.- Semoir selon les revendications 1 et 2, caractérisé en ce que la came (41) présente successivement une rampe (43) déclenchant l'ouverture du clapet (35') et une portion en arc de cercle (44) maintenant le clapet en position d'ouverture.

4.- Semoir selon les revendications 1 à 3, caractérisé en ce que la came (41) comporte des lumières en arc de cercle (42) permettant le réglage de sa position.

5.- Semoir selon la revendication 1, caractérisé en ce que les moyens d'ouverture du clapet (35') associé à chaque alvéole (34) du tambour distributeur (1) sont pneumatiques.

6.- Semoir selon les revendications 1 à 3, caractérisé en ce que les moyens d'ouverture du clapet (35') associé à chaque alvéole (34) du tambour distributeur (1) sont électriques.

7.- Semoir selon l'une quelconque des revendications 1 à 6, caractérisé en ce que sous une trémie principale (13) sont fixées des trémies secondaires (12) associées chacune à un tambour distributeur (1).

8.- Semoir selon la revendication 7, caractérisé en ce que chaque trémie secondaire (12) est fixée sous la trémie principale (13) par l'intermédiaire d'un ensemble de glissières (14-15) permettant son déplacement longitudinal et son déplacement transversal.

9.- Semoir selon l'une quelconque des revendications 1 à 8, caractérisé en ce que la ou les roues par lesquelles il repose et se déplace sur le sol entraînent, par l'intermédiaire d'un variateur de vitesse (29), un arbre (24) sur lequel sont calés des pignons (23) avec chacun desquels engrène un pignon (22) associé à une trémie secondaire (12) et calé sur un axe (18) porteur d'un galet (17) situé en-dessous de la trémie secondaire et acheminant les graines (45) dans un canal vertical (33) qui les dirige dans les alvéoles (34) du tambour distributeur sous-jacent (1).

10.- Semoir selon l'une quelconque des revendications 1 à 9, caractérisé en ce que les tambours distributeurs (1) sont calés sur un arbre horizontal (2) entraîné en rotation selon un rapport fixe, mais modifiable, par l'intermédiaire d'un arbre de renvoi (6) dont la rotation est liée à celle de la ou des roues du semoir.

11.- Semoir selon la revendication 10, caractérisé en ce que les positions longitudinale et angulaire des tambours distributeurs (1) sur leur arbre d'entraînement (2) sont règlables.

12.- Semoir selon l'une quelconque des revendications 1 à 11, caractérisé en ce que le galet distributeur (17) et le pignon (22) associés à chaque trémie secondaire (12) sont liés avec elle par des joues (20) et constituent avec elles un ensemble déplaçable permettant de mettre le pignon (22) soit en prise, soit hors de prise du pignon (23) entraîné par l'arbre (24) dont la vitesse de rotation est règlable par le variateur (29).

13.- Semoir selon l'une quelconque des revendications 1 à 12, caractérisé en ce qu'un mécanisme de roue libre (9) est interposé entre un arbre (A) recevant son mouvement des roues du semoir, et l'arbre de renvoi (6) entraînant les arbres (2) et (24) qui actionnent respectivement les tambours distribtueurs (1) et les galets distributeurs (17).

14.- Semoir selon l'une quelconque des revendications 1 à 13, caractérisé en ce que les tambours distributeurs (1) sont placés en porte-à-faux en arrière des roues par lesquelles le semoir repose sur le sol, et le chassis du semoir est, par son extrémité supérieure avant, reliée à la vis de règlage de l'attelage "trois points" d'un tracteur à relevage hydraulique, de telle sorte qu'il est possible de régler l'écartement entre le sol et les tambours distributeurs (1).

FIG.1

FIG.2

FIG. 3

0076219

FIG. 4

Office européen
des brevets

**RAPPORT DE RECHERCHE EUROPEENNE**

**0076219**
Numéro de la demande

EP  82 42 0127

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | A 01 C    7/18 |
| A | US-A-2 166 413  (KING) <br> *Page 1, colonne de droite, ligne 1 - page 2, colonne de gauche, ligne 6; figures 3,5,6* | 1-3 | |
| | --- | | |
| A | FR-A-1 482 595 <br> (MASSEY-FERGUSON) <br> *Page 4, colonne de gauche, paragraphe 3; figure 5* | 1,2 | |
| | --- | | |
| A | US-A-1 604 624  (WHITE) <br> *Page 1, lignes 40-95; figure 1* | 1,2 | |
| | --- | | |
| A | FR-A-  698 467  (WHITOMME) <br> *Page 1, lignes 52-62; page 4, lignes 5-14; figures 1-4* | 1-3 | |
| | --- | | DOMAINES TECHNIQUES RECHERCHES (Int. Cl. ³) |
| A | US-A-2 188 235  (SIMONSON) <br> *Page 1, colonne de gauche, ligne 45 - colonne de droite, ligne 37; figure 1* | 7 | A 01 C |
| | --- | | |
| A | GB-A-  517 081  (LEAKE) <br> *Page 9, lignes 69-78; figure 1* | 8 | |
| | --- | | |
| A | FR-E-   93 732  (FFSA) <br> *Page 1, colonne de gauche, paragraphe 3* | 9 | |
| | ----- | | |

Le présent rapport de recherche a été établi pour toutes les revendications

| Lieu de la recherche <br> **LA HAYE** | Date d'achèvement de la recherche <br> 22-12-1982 | Examinateur <br> MARTIN D.R.V. |
|---|---|---|